# EUROPEAN PATENT APPLICATION

(11) **EP 4 177 103 A1**
(43) Date of publication of application: **10.05.2023**
(21) Application number: 21206941.3
(22) Date of filing: 08.11.2021
(51) Int. Cl.: B60N 2/02

(54) **A SEAT ASSEMBLY, A VEHICLE AND A DETECTION METHOD**

(71) Applicant: Bayerische Motoren Werke Aktiengesellschaft, 80809 München (DE)
(72) Inventor: Zaki, Tarek, 81829 München (DE)

(57) **Abstract**

A seat assembly for mounting in a vehicle, in particular a motor vehicle, preferably a passenger vehicle, comprises: a seat; and a detector arranged to detect an object, in particular an object of interest, in a region under the seat. A corresponding vehicle and a method of detecting an object, in particular an object of interest, in a region under a seat is also provided.

## Description

The present invention relates to a seat assembly for mounting in a vehicle. The invention further relates to a vehicle, as well as a detection method.

The present invention can, in principle, be used in connection with a seat for mounting in any type of vehicle, in particular in a motorized vehicle, including vehicles for surface transportation, such as (passenger) cars, lorries / trucks, busses or coaches, rail-bound-vehicles such as trains, aerial vehicles and water-based vehicles such as ships. Given that the invention finds particular application in (passenger) cars, the invention will be described primarily in connection with cars, without being limited to this. In particular, one skilled in the art will not have any difficulties, guided by the present disclosure, to implement the invention in the context of vehicles other than cars.

Car seats are typically designed to enable configurability for a correct sitting posture. Accordingly, there are typically gaps beside and underneath such car seats to enable the car seat to be moved for adjustment. Many electric vehicles offer comfortable seating positions to enable a driver or passenger to sleep or to enjoy in-vehicle entertainment content during charging times in an appropriately adjusted relaxing position of the car seat. Therefore, any gaps beside or underneath the seats are often larger in electric vehicles than in vehicles with a combustion engine.

The inventor has recognized that drivers or passengers often lose objects, in particular small, but often valuable objects, such as keys, jewelry or coins in a region under a car seat, typically a region (i.e. an empty region) between a surface of the car seat (generally facing in a downward direction) and a floor of the car, or other surface, on which the seat is mounted. The inventor has further recognized that drivers or passengers (in the following simply referred to as "passengers") are often not aware that they have lost an object under a car seat and might, in particular, exit the car, only to notice much later (if at all) that they have lost an object in the car. Even if they are aware that they have lost an object in the car, it is sometimes difficult for them to locate and retrieve the lost object given that the space under a car seat is often poorly lit, in particular at night, and sometimes difficult to reach.

It is an object of at least some embodiments of the present invention to address the problems discussed above.

Generally speaking, the present invention employs a detector, such as, for example, a camera, to detect an object, in particular an object of interest, under a seat.

Many modern vehicles employ one or more cameras for various purposes, including for detecting the environment of the car (i.e. a region outside the car) or a portion of the inside of the car. For example, US 2021/0142642 A1 discloses an apparatus and a method for providing an alert regarding an unattended child in a vehicle. According to this disclosure, an optical camera is used, together with computer running image detection algorithms which can detect the presence of a child. For this purpose, the camera is aimed at the seat so that the child is in the field of view of the camera. For example, on exiting the car, the driver can be alerted of the presence of the child remaining in the car to help ensure that the driver does not leave the child unattended in the car.

The inventor of the present invention has appreciated that the technique disclosed in US 2021/0142642 A1, as well as other, generally similar disclosures, do not alert passengers of items lost under a car seat, nor do they help a passenger to retrieve such objects.

In a first aspect, the present invention provides a seat assembly for mounting in a vehicle, in particular a motor vehicle, preferably a passenger vehicle, wherein the seat assembly comprises a seat; and a detector arranged to detect an object, in particular an object of interest, in a region under the seat.

In the sense of the invention, the term "object of interest" can, in principle, mean any object. However, in preferred embodiments, the detector, the seat assembly or connected devices can distinguish between, on the one hand, "lost objects" such as (without limitation) a key, jewelry or coins and, on the other hand, items deliberately placed at least partly in the region under the seat, for example a small bag or a portion of a shoe worn by a passenger sitting on a seat behind the seat in question, as will be described below in more detail.

In a second, related aspect, the present invention provides a vehicle, in particular a motor vehicle, preferably a passenger vehicle, wherein the vehicle comprises a seat; and a detector arranged to detect an object, in particular an object of interest, in a region under the seat.

The terms "first", "second", "third" and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, it does not exclude other elements or steps. Where an indefinite or definite article is used when referring to a singular noun, e.g. "a", "an" or "the", this includes a plural of that noun unless something else is specifically stated.

Further, unless expressly stated to the contrary, "or" refers to an inclusive "or" and not to an exclusive "or". For example, a condition "A or B" is satisfied by any one of the following: A is true (or present) and B is false (or not present), A is false (or not present) and B is true (or present), and both A and B are true (or present).

In the following, some embodiments of the invention will be described, which can be combined with each other, and embodiments described in connection with one aspect of the invention can be combined with other aspects of the invention, unless such a combination is explicitly excluded or technically impossible.

In some embodiments, the detector is mounted on the seat, in particular on a surface of the seat generally facing in a downward direction, or on a support structure for the seat.

The surface of the seat generally facing in a downward direction may, in particular, be a bottom, lower or lowermost surface of a seat portion, in particular of a generally horizontal seat portion (also known as a seat platform) on which the passenger would sit in normal use of the seat. The detector may project from such a downward-facing surface of the seat, or be recessed or partially recessed into the seat. The support structure may be considered as part of the seat, or may be a separate component supporting the seat. The support structure may, in particular, form part of a mechanism for adjusting the position of (a portion of) the seat, in particular in a lengthwise direction with respect to the forward direction of (travel of) the vehicle. Accordingly, the detector does not necessarily have to be mounted on, or on the underside of, a generally horizontal surface, but can, for example, also be mounted on a generally vertical surface, provided that the detector is (arranged to be) able to detect an object, in particular an object of interest, in a region under the seat (when in use).

In some embodiments, in particular in connection with the second aspect of the invention, the detector is not mounted on, or supported by, the seat but may be mounted on, or supported by, a separate support structure. For example, the detector may be mounted on a floor under the seat or may be mounted on a support structure which is mounted with respect to the vehicle, in particular with respect to the floor of the vehicle under the seat.

In some embodiments, the detector comprises a camera, in particular a camera arranged to detect visible light, a thermal imaging camera, an infrared camera or a TOF camera.

A camera arranged to detect visible light may, in particular, be a photographic camera.

A TOF camera (time-of-flight camera) is generally known in the art. A TOF camera may, in particular, be used to generate information which corresponds to a three-dimensional representation of a scene.

The detector may also combine more than one of the capabilities indicated above. For example, the detector may comprise a camera which can detect both visible light and infrared light, or it may comprise a TOF camera which is able to detect light in the infrared range. In addition, or as an alternative, a detector may comprise more than one camera, in particular of different types, and / or more than one detector may be provided, whereby the detectors may have corresponding or similar capabilities, or different capabilities. The plurality of detectors may be located in substantially different positions with respect to the seat, for example one detector near the front of the seat and one detector neat the rear of the seat.

In some embodiments, a source of electromagnetic radiation, in particular a light source, may be provided. This can be integrated into the detector, or it may be a separate component and may therefore also be mounted separately. Again, the source of electromagnetic radiation or the light source may be mounted on the seat, on a support structure for the seat, or may be mounted separately, for example on the floor under the seat or on a separate support structure which is mounted on the floor (of the vehicle).

The electromagnetic radiation may, in particular, be chosen so as to facilitate the detection of the object, depending on the detection capabilities of the detector. For example, if the detector is arranged to detect visible light, the source of electromagnetic radiation may be a light source emitting (at least) visible light. Similarly, if the detector comprises an infrared camera, the source of electromagnetic radiation may be a source of infrared light. The source of electromagnetic radiation may, in particular, comprise one or more LEDs.

Preferably, the source of electromagnetic radiation is arranged to illuminate or irradiate at least a portion of the region under the seat, in particular (substantially) the entire region under the seat.

In some embodiments, the detector is arranged to detect objects not only in the region under the seat, but also in a region next to the seat. Similarly, the source of electromagnetic radiation may illuminate or irradiate not only the region under the seat, but also a region next to the seat. Both may help a user to locate objects in a region next to the seat. In this context, the term "next to the seat" is, in particular, intended to refer to a region at a similar or (substantially) the same level (in vertical direction) as a region under the seat.

In some embodiments, the detector has a (defined) field of view. The field of view may be omnidirectional, substantially omnidirectional, or may be more limited. In particular, the detector may be such that its field of view is primarily directed towards the region under the seat. For example, in the case of a camera, the camera would be able to capture (at least a portion of) the region under the seat.

In some embodiments, the field of view covers substantially the entire region under the seat. In this case, objects can be detected by the detector regardless of where in the region under the seat they are located. Alternatively, the field of view may cover substantially less than the entire region under the seat. In this case, it is possible that the detector can only detect objects if they are located in the field of view. In order to cover the entire region under the seat, more than one detector may be provided, or the detector may comprise a plurality of individual detectors (such as cameras), which, together, cover a combined field of view which is larger than the field of view of each individual detector, preferably thereby covering (substantially) the entire region under the seat.

In addition, or as an alternative, the seat assembly or the vehicle may comprise an actuator for moving at least a portion of the detector so as to modify the field of view. For example, in the case of a camera, the camera could be pivoted or translated so as to modify the field of view, in particular to "move" the field of view. In this way, it is possible to scan much or all of the region under the seat. In addition, or as an alternative, the detector may have a zoom function, for example to zoom into a region of interest. Such a region of interest might be identified by the seat assembly, the vehicle or components connected thereto, as a possible region of interest in a first iteration, for example on the basis of an initial scan or other detection process performed on the region under the seat. In such an initial scan or detection process, the detector may use a zoomed-out setting to cover a relatively wide area in a relatively short period of time. The information provided during the course of this initial scan or detection process can then be assessed by the car seat assembly, the vehicle or the component connected thereto, to identify a region or regions in which an object, in particular an object of interest, is assumed. Suitable algorithms are known in the art, for example using a relatively low detection threshold.

In a second iteration, the possible region(s) of interest can then be examined in more detail, in particular using a zoomed-in setting of the detector, and perhaps with a higher detection threshold, thereby eliminating those possible regions of interest from the first iteration in which, on closer inspection during the second iteration, no object, and in particular no object of interest, has actually been detected.

In addition, or as an alternative, the detector may have a focus function and may be able to (automatically) adjust its focus. This may improve the accuracy of the detection.

In some embodiments, the detector comprises an interface, preferably a wired or wireless interface, for outputting a detection output.

The wired interface may, for example, be an electrical connector for connection to an output device (such as the ones described below) for outputting the detection output on that output device. If the detector is hard-wired to the output device, the interface may be regarded as a point along the connection between the detector and the output device.

In addition, or as an alternative, a wireless interface may be provided for wireless communication with an output device.

The wired or wireless interface may also be used to communicate information from the detector to a connected device, on the basis of which the connected device may generate a detection result. For example, the detector may provide unprocessed or pre-processed information to the connected device via the interface without the detector itself analyzing the provided information. The connected device may then analyze the provided information to determine whether an object, in particular an object of interest, is located in the region under the seat or not, and provide an output indicative of the result, in particular to inform a user as to whether an object, in particular an object of interest, is located in the region under the seat.

In some embodiments, the detection output comprises at least one of, or a combination of, an indication, in particular a visual and / or audible indication, as to whether an object, in particular an object of interest, is in the region under the seat, or a signal indicative thereof; an indication, in particular a visual and / or audible indication, as to whether an object, in particular an object of interest, is in the region under one of a plurality of seats of the vehicle, of which the seat forms a part, or a signal indicative thereof; a visual representation of the region under the seat, or a signal indicative thereof; a visual representation of the object, in particular the object of interest, in the region under the seat, or a signal indicative thereof; an indication, in particular a visual representation and / or an audible indication, of where, within the region under the seat, the object, in particular an object of interest, is located (at least approximately), or a signal indicative thereof; an indication, in particular a visual representation and / or an audible indication, of the type of object, in particular of the type of object of interest, in the region under the seat.

An indication as to whether an object, in particular an object of interest, is in the region under the seat may be of a binary type and may simply indicate whether an object, in particular an object of interest, is, or is not, in the region under the seat without providing any further information or more detailed information. In a vehicle with several seats (with each seat preferably being provided with a corresponding detector), the indication may simply be an indication that an object, in particular an object of interest, is located under any one of the seats without specifying which seat is concerned.

However, in more sophisticated embodiments (again, in connection with a vehicle equipped with several seats), the indication comprises information as to which seat of the vehicle is concerned.

Whether in embodiments with only one seat, or multiple seats within a vehicle, the indication may provide information as to the (at least approximate) location of the object, in particular of the object of interest, in the region under the seat. For example, this may comprise an indication, e.g. a text-based indication, such as "front right", "rear left", "center", or a graphical indication, so as to direct a user to a specific sub-region within the region under the seat concerned, thereby enabling a user to more quickly locate and retrieve the object. As mentioned above, the indication may be an audible indication, such as spoken words ("front right", "item under driver's seat", "item in central location under driver's seat", etc.). In more basic embodiments, the indication could simply be an audible warning sound.

The indication may comprise a schematical or more realistic representation, for example a (top view) image or a photographic representation "as seen by a camera" of the seat arrangement within the vehicle (in case of multiple seats within the vehicle) and / or of the region or a portion the region under one or more of the seats and / or of the object, in particular of the object of interest.

In some embodiments, the location of the object, in particular of the object of interest, may be highlighted, for example by a representation of an arrow pointing to the location of the object, in particular of the object of interest, within the representation of the region under the seat in question, or pointing to a particular seat.

An indication of the type of object may be visual, for example by displaying the word "coin" on a display or may show an image (which may be pre-recorded) of a coin. Similarly, an audible indication of the type of object may be a spoken word, such as "coin".

In some embodiments, no particular analyzing of the information detected by the detector is carried out. That is, for example in the case where the detector comprises a camera, the camera provides image information of the region under the seat, and this image information is displayed on a display. In such embodiments, the seat assembly, the vehicle or any connected devices do not (attempt to) determine whether an object, and in particular whether an object of interest, is located in the region under the seat (or under any of the seats of the vehicle). Instead, an image of the region under the seat / seats is shown to a user, who can then determine on the basis of the image whether or not an object, in particular an object of interest, is located in the region under the seat / seats.

In all of the above embodiments, an indication, in particular a visual and / or audible indication, may be output by the seat assembly or vehicle. However, the seat assembly or vehicle may instead, or in addition, output a signal indicative of such an indication, and, in particular, of such a visual representation. In particular, a signal indicative of such an indication or representation may be provided via the interface mentioned above, to a connected device, to enable the connected device to output the indication or representation to a user. In some embodiments, "a signal indicative" means a signal on the basis of which such an indication or representation, in particular such a visual and / or audible indication or representation, can be generated.

In some embodiments, the interface is for connection to, or communication with, or is connected to, or communicates with, other devices, in particular a phone, loudspeaker and / or a display, in particular a central information display or a headrest display.

As is known in the art, in a car, a central information display is typically located in front of, and between, a driver's seat and a passenger's seat next to the driver's seat. Other locations are equally possible. In the case of a headrest display, the display is most conveniently attached to, or integrated into, a headrest of a seat that is generally in front of the seat in question. So, for example, if an object, in particular an object of interest, is detected under a seat that is located behind the driver's seat of a car, a corresponding output would be generated on a display at the back of the headrest of the driver's seat.

The "other device" may, however, be substantially independent from the vehicle in which the seat or seat assembly is (to be) installed. This may, for example, be a phone, in particular a cell phone / mobile phone, or a laptop or other computing device. The connection may be wireless, for example via Bluetooth^{®}, but could also be of a type which has a larger operating range, and may in particular make use of a public telephone network.

In some embodiments, however, the seat assembly or the vehicle may further comprise circuitry for connecting the interface to such other devices. As used in the present specification, the term "circuitry" is intended to encompass not only connections by means of a (metallic) wire, but also optical connections, preferably also any other type of physical connection allowing for the transmission of information.

In some embodiments, the seat assembly or vehicle further comprises a processing unit for distinguishing between an object of interest and an object which is not of interest, or for assigning a detected object to one of at least two categories and providing an output indicative of the assigned category.

As mentioned above, it can be useful to distinguish between an object of interest, such as a dropped key, ring or coin, and an object which is not interest, such as a foot of, or a shoe worn by, a user sitting on a seat behind the seat in question. The inventor has appreciated that existing known tools for image processing (such as object classification algorithms) can be used in embodiments of the invention as part of an algorithm to recognize (the shape of) objects and to identify the type of objects detected (e.g. whether a detected object is a ring, a key, a bag, a shoe or foot or part thereof, in particular the front part thereof). Pursuant to some embodiments of the invention, this then also allows a distinction to be made between objects of interest and objects not of interest, subject to suitable definitions. Such algorithms may be executed on the processing unit forming part of the seat assembly or vehicle.

The processing unit can receive information from the detector regarding the region under the seat, in particular regarding an object in the region under the seat (which object may or may not be of interest), and can process this information, for example using an algorithm of the type mentioned above. As part of the manufacture of the seat assembly or vehicle, suitable definitions may be provided to, or programmed into, the processing unit as to what kind of objects are to be considered as objects of interest and which kind of objects are to be considered as an object which is not of interest. To this end, types of objects may be allocated to categories such as "object of interest" and "object not of interest". Using these categories, the processing unit can then provide a corresponding output, after assigning a detected object to one of these categories. As an alternative, more than two categories can be defined, for example "object of interest" (such as objects which are typically dropped accidently in a vehicle, such as a key, ring or coin), "object not of interest" (such as part of a shoe or a foot), and "object potentially of interest". The category "object potentially of interest" could, for example, be assigned to items, which may or may not have been placed under the seat deliberately, and / or which may relatively easily be forgotten by a user, for example a small bag.

As an alternative, the seat assembly or vehicle may not itself comprise a processing unit as described above but may, instead, provide information regarding the region under the seat to a connected device, whereby the connected device comprises a processing unit for distinguishing between an object of interest and an object which is not of interest (and optionally an object which is potentially of interest), or for assigning a detected object to one of at least two categories and providing an output indicative of the assigned category. This output can be transmitted back to the seat assembly or vehicle, or can be provided directly to a user (for example to a cell phone / mobile phone).

In some embodiments, the detector is arranged to be activated at least one of: in a cyclical manner, in particular at intervals of fixed or variable duration, in particular at intervals of user-selectable duration; in an event-based manner; or in dependence upon a sensor signal, in particular in dependence upon a motion sensor signal.

An activation in a cyclical manner can, for example, take place every ten seconds, or once per minute, by way of example. An activation in an event-based manner can, for example, be triggered by events such as the stopping of an engine of the vehicle, the opening of a door of the vehicle, the reduction of a speed of the vehicle below a particular threshold, or based on a user input, for example the pressing of a button by the user or the touching of a touchscreen by the user. Depending on the implementation, such a touchscreen or button may be part of the vehicle, or may be part of a connected device, such as a user's phone.

An activation of the detector in dependence upon a sensor signal may, for example, be implemented using a sensor which senses a downward movement, in particular a falling movement, of an item within the region under the seat. Suitable sensors, in particular motion sensors, are known to those skilled in the art. When the sensor has detected a movement in the region under the seat, it can send a sensor signal to the detector (for example a camera) so as to activate the detector. This may reduce energy consumption in comparison to a cyclical activation of the detector.

The options described above may also be combined. For example, the detector may be activated in dependence upon a sensor signal, and additionally when the motor of the vehicle is turned off and / or on demand by a user.

It is also noted that the detector may be activated in the manner described above regardless of whether the seat assembly or the vehicle is intended to detect the presence of an object, in particular the presence of an object of interest, determine the (approximate) location of an object, in particular of an object of interest (within the region under the seat and / or, in the case of a vehicle with several seats, an identification of the seat in question within the vehicle) and / or whether the seat assembly or vehicle is intended to identify the type of object, or whether the seat assembly or vehicle is merely intended to display a representation of the region under the seat to a user.

In some embodiments, the seat assembly or vehicle is further arranged to (i) record information regarding the region under the seat at first and second points in time, in particular a representation of the region under the seat as detected by the detector at first and second points in time; (ii) compare the information regarding the region under the seat at the first point in time with the information regarding the region under the seat at the second point in time, to produce a comparison result; and (iii) detect the object, in particular the object of interest, in the region under the seat on the basis of the comparison result.

For example, the recorded information at the first and second points in time could be a pixel-based representation of the region under the seat. On the basis of the pixel-based representation, the seat assembly, the vehicle or a connected device can, for example, detect changes in brightness between pixels recorded at the first and second points in time for the same pixel location. In some embodiments, the overall brightness of the pixel-based representation can be taken into account, for example by normalizing (the brightness of) the pixel-based representations at the first and second points in time, before comparing the two pixel-based representations.

In addition, or as an alternative, objects, in particular objects of interest, can also be identified on the basis of information regarding the region under the seat recorded at only one point in time. For example, brightness changes from one sub-region to another sub-region of the region under the seat could be detected, or areas of the region under the seat could be identified where the brightness is (significantly) higher than the average brightness of the region under the seat. Edge detection can also be used to identify objects in the region under the seat. Suitable algorithms are known *per se.*

In a third aspect, the present invention provides a method of detecting an object, in particular an object of interest, in a region under a seat. The method comprises: using a seat assembly as described above, or a vehicle as described above, to detect the object, in particular the object of interest, in the region under the seat; and providing a detection output on the basis of the detection.

Further advantages, features and applications of the present invention are provided in the following detailed description and the appended figures, wherein:
- **Figure 1**: schematically shows a rear view of a vehicle seat assembly according to an embodiment of the present invention.
- **Figure 2**: shows an enlarged view of a lower portion of the vehicle seat of Figure 1.
- **Figure 3**: schematically shows a plan view of a vehicle according to an embodiment of the present invention.
- **Figure 4**: schematically shows a detector for use in embodiment of the present invention.
- **Figure 5**: shows a flow chart illustrating a method according to an embodiment of the present invention.
- **Figure 6**: schematically shows a display of a display device according to an embodiment of the present invention.
- **Figure 7**: schematically shows a representation of a region under a vehicle seat in a plan view.

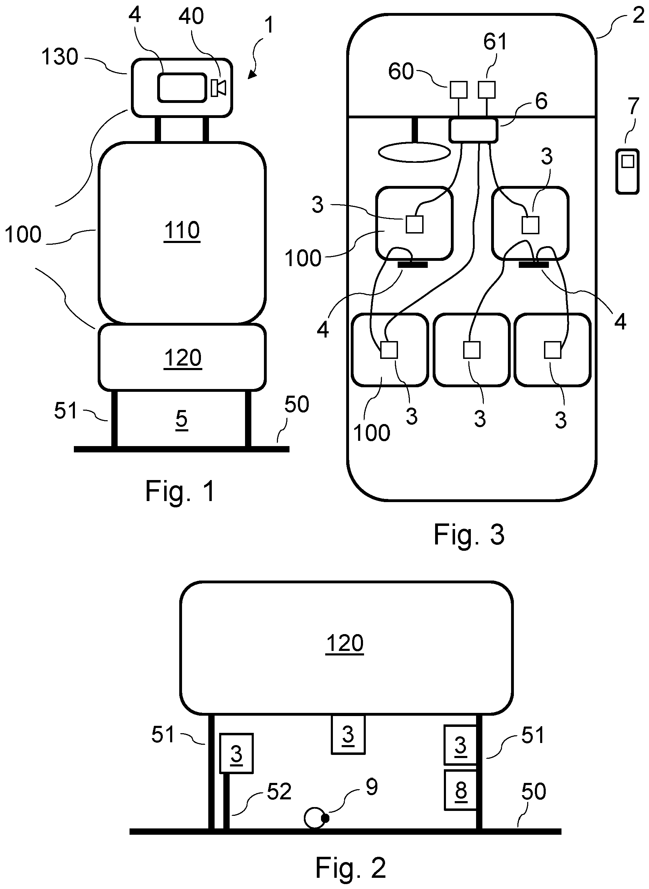

**Figure 1** schematically shows a rear view of a vehicle seat assembly 1 according to an embodiment of the present invention, for use in a vehicle. The seat assembly 1 comprises a seat 100, which may be constructed in a manner substantially similar to a typical car seat having a generally horizontal portion also known as a seat platform 120 and a generally upright portion also known as a backrest 110, as well as a headrest 130. The seat 100 is mounted with respect to floor 50 of a vehicle (such as a car) via a support structure 51. The support structure 51 may (be considered to) form part of seat 100 or seat assembly 1, or may be a separate component. Support structure 51 may in particular comprise an adjustment mechanism for seat 100, in particular to allow the position of seat 100 to be adjusted, in particular in the longitudinal direction of the vehicle. The (typically empty) space between a lower surface of seat platform 120 and floor 50 is referred to in the present specification as a "region under the seat" and carries reference sign 5. A headrest display device 4 is attached to, or integrated into, the rear of headrest 130. Further, an audible output device such as a loudspeaker 40 is also attached to, or integrated into, headrest 130. In alternative embodiments, a buzzer may be provided instead of, or in addition to, loudspeaker 40. The purpose of display device 4 and loudspeaker 40 will be explained later. Further, they do not necessarily need to be located at the back of headrest 130 but could, for example, also be provided at the back of backrest 110.

**Figure 2** shows an enlarged view of a lower portion of the vehicle seat of Figure 1. In particular, it shows an enlarged view of seat platform 120 mounted with respect to floor 50 via support structure 51. Figure 2 also shows three possible locations of detector 3, whereby it is noted that it would be sufficient if only one detector 3 was provided. However, more than one detector may be provided. Further, the locations of detectors 3 as shown in Figure 2 are provided by way of example only. Other locations are possible.

Figure 2 shows a detector 3 mounted to a lower surface of seat platform 120. Whilst this detector 3 is shown as projecting downwards from the lower surface of seat platform 120, detector 3 could also be partially or entirely recessed into seat platform 120. An alternative mounting position for a detector 3 is shown on the right-hand side of Figure 2, where detector 3 is attached to support structure 51. Again, detector 3 could be integrated into the support structure 51. A third possible mounting position is shown on the left-hand side of Figure 2, where detector 3 is mounted on a (separate) support structure 52 projecting upwards from floor 50. Common to all three examples of mounting positions is the fact that they are at an elevated position with respect to floor 50. This is preferred since objects, in particular small objects such as ring 9, lying on floor 50 in the region 5 under seat 100, can more easily be detected (or the region 5 under seat 100 can more easily be "monitored") from an elevated position with respect to floor 50, for example from a position within the top half of region 5 under the seat 100. In alternative embodiments, one or more detectors 3 may, however, be provided at a lower position than those illustrated, as long as detector(s) 3 can detect items within region 5 under seat 100. In an embodiment not explicitly shown in Figure 2, one or more detectors 3 may for example be mounted (directly) on the floor 50 and may for example comprise a (rotatable) camera, for example a camera which is rotatable by 360 degrees (in a horizontal plane), to scan the (entire) region under seat 100.

Figure 2 also shows a source of electromagnetic radiation, in particular a light source 8. In the example shown, this is mounted to, or integrated into, support structure 51. Other mounting locations for light source 8 are possible, for example, on the lower surface of seat platform 120. Whilst light source 8 is shown as a separate component, it may also be integrated into detector 3. Source of electromagnetic radiation 8 or light source 8 is intended to irradiate or illuminate at least a portion of region 5 under seat 100 to aid in the detection of objects by detector 3.

**Figure 3** schematically shows a plan view of vehicle 2, such as a (passenger) car. Vehicle 2 is equipped with five seats 100, whereby only two seats 100 have been labelled - the driver's seat 100 shown towards the top left of the plan view, behind a steering wheel (not labelled), as well as a seat generally behind the driver's seat and slightly towards the left. In this example embodiment, each seat is equipped with a detector 3, centrally with respect to seat platform 120 and at a lower surface thereof so that each detector 3 can monitor the region 5 under the respective seat 100.

Display devices 4 are attached to, or integrated into, the rear surface of the headrests 130 of the front two seats so that they are visible to passengers sitting on the rear three seats. A further display 6 is provided near the front of the vehicle so that it is visible at least to the driver and a passenger on the front right seat. Display device 6 may provide several display functions (such as navigation information) and may additionally provide a user input interface, as is typical with many central information displays (CID). Display devices 4 and / or CID 6 may comprise a touch screen.

Figure 3 also shows circuitry (not labelled) for connecting each detector 3 with a respective display device 4 or CID 6. As shown in Figure 3, the two detectors 3 for the front seats are connected to CID 6. The detector 3 of the rear left seat is connected to display device 4 at the back of the driver's seat, and the detectors 3 of the remaining two seats (rear central and rear right-hand side) are connected to display device 4 at the back of the front right passenger seat. Figure 3 shows an additional connection from detector 3 under the rear left-hand seat to CID 6. The remaining two seats could also be connected to CID 6, but these connections are not shown in the interest of a clear illustration. More generally, the connections shown should only be regarded as examples; more, or fewer, connections could be provided; the connections can be wired or wireless (via suitable interfaces); physical connections may, for example, be electric connections or optical connections; the connections between a detector 3 and a display device 4 or CID 6 may be via another connected device (such as a processing unit), or one or more of the detectors 3 or display units 4 or CID 6 may comprise, or be connected to a further device, such as a processing unit. One such example of a processing unit 60 is shown in Figure 3 as being connected to CID 6. CID 6 further comprises, or is connected to, a wireless interface 61, for wireless communication with detectors 3 or other devices, in particular computing devices, such as cell phones 7 / mobile phones 7. Whilst cell phone 7 is shown in a location outside vehicle 2, it may also be located within vehicle 2.

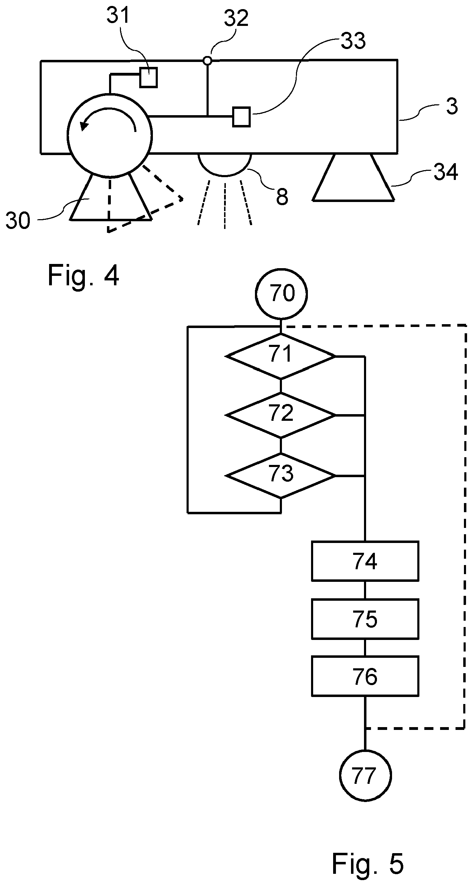

**Figure 4** schematically shows (a more detailed view of a structure of) a detector 3 for use in embodiment of the present invention. Detector 3 comprises a camera 30. The field of view of camera 30 may be fixed, for example such that it can cover substantially the entire region 5 under seat 100. Alternatively, as shown in Figure 4, detector 3 can be provided with an actuator 31 for moving at least a portion of camera 30, for example at least a lens thereof, for example about at least one axis, in particular two axes. In this way, even though the field of view of camera 30 may be (significantly) smaller than region 5 under seat 100, the entire region 5 under seat 100 can nevertheless be covered by adjusting the orientation of camera 30. Detector 3 may further comprise a processing unit (not shown) for processing information provided by camera 30, or may, as shown in Figure 4, comprise a wired interface 32 for wired connection to a further device such as CID 6, and / or a wireless interface 33 for wireless communication with a further device. Additionally, in the embodiment shown in Figure 4, a light source 8 is integrated into detector 3 for illuminating region 5 under seat 100.

Detector 3 also comprises a sensor 34. Sensor 34 is intended to sense the presence of an object within region 5 under seat 100, and in particular is intended to detect when an object newly appears within region 5 under seat 100. Sensor 34 may, for example, comprise a motion sensor. Motion sensors are known in principle and will therefore not be described in detail. In an alternative embodiment, sensor 34 is provided separately from detector 3, and could be mounted, for example, at any of the mounting locations shown in Fig. 2 for detectors 3 or light source 8.

It is noted that the various components described here, such as detector 3, camera 30, light source 8, motion sensor 34, actuator 31, display devices 4 and CID 6 may be controlled by one or more suitable control unit or units. Such control unit or units is / are not shown as such in the figures but may be provided in one or more of the components described herein. Depending on how the various components are connected, a control unit integrated into one component may also control another component. Further, one or more control units for controlling the components described herein may be integral with, or identical with, a processing unit for processing information provided by one or more of the detectors 3. One such processing unit 60 is shown in Figure 3.

**Figure 5** shows a flow chart illustrating a method according to an embodiment of the present invention.

After the start 70 of the method, the seat assembly 1 or the vehicle 2 checks, for example via a suitable control unit, whether a specified period of time has elapsed since a previous attempt to detect any objects in the region 5 under seat 100 has been made. In this way, the energy consumption of the seat assembly or vehicle can be reduced since most of the components described herein can be deactivated or powered down after a detection attempt has been made and activated only after the specified period of time. If the specified period of time has elapsed, the method proceeds to step 74, which will be described later. If the specified period of time has not yet elapsed, the method proceeds to step 72, in which the seat assembly or vehicle checks whether a particular event has occurred. For example, a check is carried out whether a motor of the vehicle has stopped. If the event has occurred, the method proceeds to step 74. If not, the method proceeds to step 73, in which sensor 34 is interrogated as to whether it has sensed that an object is present in region 5 under seat 100 and / or whether an object has (newly) appeared in region 5 under seat 100. If this is the case, the method proceeds to step 74. If not, the method returns to step 71 for another iteration of steps 71, 72, and 73.

It is noted that steps 71, 72, and 73 could be carried out in a different order, and / or any one, or even all of steps 71, 72, and 73 could be omitted. For example, if step 71 was omitted, the method would (only) proceed to step 74 if the specified event has occurred (step 72) or if a corresponding sensor output has been obtained (step 73). If all of steps 71 to 73 are omitted, the method immediately proceeds to step 74.

In step 74, the detector 3, in particular camera 30, captures the scene in the region 5 under seat 100. In some embodiments, source 8 of electromagnetic radiation is also switched on to irradiate / illuminate region 5 under seat 100. The information regarding region 5 under seat 100 as detected by detector 3 is provided to processing unit 60, which then analyzes this information (step 75), as will be described below. Once processing unit 60 has analyzed the information, and depending on the result of this analyzing process, a detection output is generated and output (step 76), for example via one or more display devices 4 or CID 6 and/or via audible output device 40 and / or via phone 7. Depending on the particular implementation, the method may then end (step 77) or may return to step 71, as indicated in Figure 5 by a dashed line.

The analyzing step 75 may be implemented in different ways. For example, assuming that the information regarding region 5 under seat 100 is present in the form of image information, in particular pixel-based image information, the processing unit 60 can detect brightness changes within the image, apply an edge detection technique, or identify regions within the image which have a brightness which is more than the average brightness of the image. In addition, or as an alternative, the processing unit 60 can also record one or more images and, thus, compare the information relating to a current image with the information relating to a previously recorded image. In this way, pixels can be identified whose brightness has changed as between the previously recorded image and the current image, or pixels can be identified whose brightness change has been more significant than the brightness change of other pixels. In this way, (the presence of) objects (which may or may not be of interest) in the region 5 under seat 100 can be identified. Suitable algorithms for this process are known *per se.* In some embodiments, machine-learning classification algorithms such as Logistic Regression, k-Nearest Neighbours, Decision Trees or Support Vector Machine can be used by the processing unit to identify if a (foreign) object is present in the field of view.

Once an object has been identified as having appeared in region 5 under seat 100, further analysis can be carried out by processing unit 60. On the basis of the detected shape of the object, the processing unit can try to identify the type of object, for example using image processing algorithms such as Fast R-CNN, HOG, SSD, etc.

These algorithms may refer to databases storing information regarding the typical shape of a variety of objects. In particular, in this way it is possible, at least with a good degree of accuracy, to distinguish between an object of interest 9, such as a ring, coin, or key, and an object which is not of interest, such as part of a shoe worn by a person and placed under the seat in question. A detected object can also be identified as an object which is potentially of interest, such as a small bag which may have deliberately been placed under seat 100.

In a further development, processing unit 60 not only performs a somewhat coarse classification into two or three categories such as "object of interest", "object not of interest", and "object potentially of interest", but can identify the specific type of object, in particular within the broader category of "object of interest". For example, processing unit 60 can recognize, e.g. referring to databases storing shapes of objects, whether an object of interest 9 in region 5 under seat 100 is a ring, a key, a coin, etc., and generate a corresponding output.

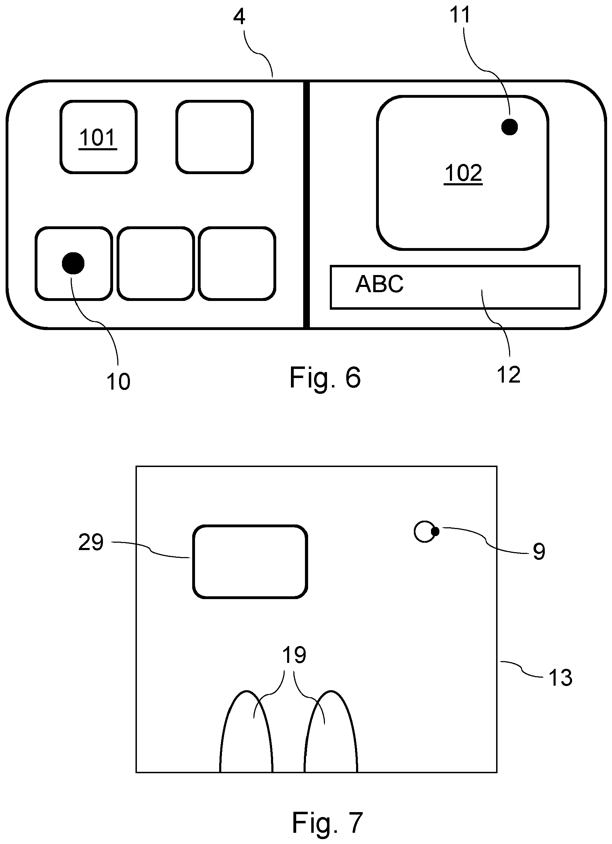

**Figure 6** shows a display 4 displaying information regarding region 5 under seat 100. In the left half, display 4 may show a schematic representation 101 of the five seats of vehicle 2 (only one of them being labelled 101). In addition, a visual indication 10 of an object, in particular an object of interest, is displayed. This can alert a user to the fact that an object, in particular an object of interest, is present under (any) one of the seats, or may indicate that an object, in particular an object of interest 9, is located under a particular seat, in this particular example under the rear left seat. Whilst visual indication 10 is illustrated in Figure 6 as a black dot marking the rear left seat, visual indication 10 could be any other mark.

In the right half of Figure 6, display 4 displays an enlarged schematic representation 102 of the seat under which an objection of interest 9 is located. This representation does not merely indicate that an object of interest 9 is located under the seat in question, but also indicates, by way of visual indication 11, the (approximate) location of the object of interest 9 under the seat. In the example shown, the visual indication 11 indicates that the object of interest 9 is located near the front right-hand corner of the seat. Again, visual indication 11 could be any type of mark.

In Figure 4, under the schematic representation 102 of the seat in question, display 4 includes a visual text-based indication 12. This may provide text-based information regarding the fact that an object, in particular an object of interest, is located under (any) one of the seats of vehicle 2, or may indicate under which seat an object is located, or may (additionally) indicate the approximate location of the object under the seat in question (for example front right-hand corner) and / or may indicate the type of object.

It will be understood that display 4 may provide detection outputs which are different from those shown in Figure 6. In particular, display 4 may only provide the visual indication as shown in the left-hand part of Figure 6, or only the enlarged representation as shown in the upper portion of the right-hand part of Figure 6, or only the text-based indication 12, or any combination thereof.

**Figure 7** shows a visual representation 13 of region 5 under seat 100. In particular, this can be an image recorded by detector 3 or camera 30. Visual representation 13 shows a ring 9 as an object of interest, a bag 29 as an object potentially of interest, as well as the front part of two shoes 19 as objects which are not of interest. Visual representation 13 may help a user to more easily or more quickly retrieve object 9 of interest and, perhaps, also object 29 potentially of interest.

Visual representation 13 can be displayed on display device 4 or CID 6 in addition to, or instead of, any of the visual representations shown in Figure 6. For example, display 4 or CID 6 may simply display the visual representation 13 in response to an input by a user (for example the pressing of a button by the user or the touching of a touchscreen by the user), for example on completion of a journey. In this case, an analysis as to the location of objects (of interest) or of the type of object does not necessarily need to take place. Further, if the visual representation 13 is displayed (only) in response to user input, there is no need for a sensor (such as sensor 34) to detect whether an object has (newly) appeared in region 5 under seat 100.

While at least one example embodiment of the present invention has been described above, it has to be noted that a great number of variations thereto exist. Furthermore, it is appreciated that any described example embodiments only illustrate non-limiting examples of how the present invention can be implemented and that it is not intended to limit the scope, the application or the configuration of the apparatuses and methods described herein. Rather, the preceding description will provide the person skilled in the art with instructions for implementing at least one example embodiment of the invention, whereby it has to be understood that various changes of functionality and the arrangement of the elements of the example embodiment can be made without deviating from the subject-matter defined by the appended claims, as well as their legal equivalents.

### List of Reference Signs

- 1: (vehicle / car) seat assembly
- 2: vehicle / car
- 3: detector
- 4: (headrest) display device
- 5: region under seat
- 6: display / central information display (CID)
- 7: cell phone / mobile phone
- 8: source of electromagnetic radiation / light source
- 9: object of interest
- 10: visual indication (of object / location of object)
- 11: visual indication (of object / location of object)
- 12: visual text-based indication (of object / location of object)
- 13: visual representation of region under seat
- 19: object not of interest
- 29: object potentially of interest
- 30: camera
- 31: actuator
- 32: wired interface
- 33: wireless interface
- 34: (motion) sensor
- 40: audible output device / loudspeaker
- 50: floor
- 51: support structure for seat
- 52: support structure for detector
- 60: processing unit
- 61: interface
- 70 - 77: method steps
- 100: seat
- 101: representation of seat
- 102: representation of seat
- 110: generally upright portion of seat / backrest
- 120: generally horizontal portion of seat / seat platform
- 130: headrest

## Claims

1. A seat assembly for mounting in a vehicle, in particular a motor vehicle, preferably a passenger vehicle, wherein the seat assembly comprises:
a seat; and
a detector arranged to detect an object, in particular an object of interest, in a region under the seat.

2. A vehicle, in particular a motor vehicle, preferably a passenger vehicle, wherein the vehicle comprises:
a seat; and
a detector arranged to detect an object, in particular an object of interest, in a region under the seat.

3. A seat assembly according to claim 1 or a vehicle according to claim 2, wherein the detector is mounted on the seat, in particular on a surface of the seat generally facing in a downward direction, or on a support structure for the seat.

4. A seat assembly according to claim 1 or 3, or a vehicle according to claim 2 or 3, wherein the detector comprises a camera, in particular a camera arranged to detect visible light, a thermal imaging camera, an infrared camera or a TOF camera.

5. A seat assembly according to claim 1, 3 or 4, or a vehicle according to any one of claims 2 to 4, further comprising a source of electromagnetic radiation, in particular a light source.

6. A seat assembly according to any one of claims 1 or 3 to 5, or a vehicle according to any one of claims 2 to 5, wherein the detector has a field of view, wherein:
the field of view covers substantially the entire region under the seat, or
the field of view covers substantially less than the entire region under the seat, optionally wherein the seat assembly or the vehicle comprises an actuator for moving at least a portion of the detector so as to modify the field of view.

7. A seat assembly according to any one of claims 1 or 3 to 6, or a vehicle according to any one of claims 2 to 6, wherein the detector comprises an interface, preferably a wired or wireless interface, for outputting a detection output.

8. A seat assembly or a vehicle according to claim 7, wherein the detection output comprises at least one of, or a combination of:
an indication, in particular a visual and / or audible indication, as to whether an object, in particular an object of interest, is in the region under the seat, or a signal indicative thereof;
an indication, in particular a visual and / or audible indication, as to whether an object, in particular an object of interest, is in the region under one of a plurality of seats of the vehicle, of which the seat forms a part, or a signal indicative thereof;
a visual representation of the region under the seat, or a signal indicative thereof;
a visual representation of the object, in particular the object of interest, in the region under the seat, or a signal indicative thereof;
an indication, in particular a visual representation and / or an audible indication, of where, within the region under the seat, the object, in particular the object of interest, is located, or a signal indicative thereof;
an indication, in particular a visual representation and / or an audible indication, of the type of object, in particular the type of object of interest, in the region under the seat.

9. A seat assembly or a vehicle according to claim 7 or 8, wherein the interface is for connection to, or communication with, other devices, in particular a phone, loudspeaker and / or a display, in particular a central information display or a headrest display.

10. A seat assembly or a vehicle according to claim 9, further comprising circuitry for connecting the interface to said other devices.

11. A seat assembly according to any one of claims 1 or 3 to 10, or a vehicle according to any one of claims 2 to 10, further comprising a processing unit for distinguishing between an object of interest and an object which is not of interest, or for assigning a detected object to one of at least two categories and providing an output indicative of the assigned category.

12. A seat assembly according to any one of claims 1 or 3 to 11, or a vehicle according to any one of claims 2 to 11, wherein the detector is arranged to be activated at least one of:
in a cyclical manner, in particular at intervals of fixed or variable duration, in particular at intervals of user-selectable duration;
in an event-based manner, in particular in response to a user input; or
in dependence upon a sensor signal, in particular in dependence upon a motion sensor signal.

13. A seat assembly according to any one of claims 1 or 3 to 12, or a vehicle according to any one of claims 2 to 12, further being arranged to:
record information regarding the region under the seat at first and second points in time, in particular a representation of the region under the seat as detected by the detector at first and second points in time;
compare the information regarding the region under the seat at the first point in time with the information regarding the region under the seat at the second point in time, to produce a comparison result; and
detect the object, in particular the object of interest, in the region under the seat on the basis of the comparison result.

14. A method of detecting an object, in particular an object of interest, in a region under a seat, the method comprising:
using a seat assembly according to any one of claims 1 or 3 to 13, or a vehicle according to any one of claims 2 to 13 to detect the object, in particular the object of interest, in the region under the seat; and
providing a detection output on the basis of the detection.
